# EUROPEAN PATENT APPLICATION

(11) **EP 4 349 446 A1**
(43) Date of publication of application: **10.04.2024**
(21) Application number: 23197372.8
(22) Date of filing: 14.09.2023
(51) Int. Cl.: B01D 19/04, C08L 71/02, C08L 83/00, C08L 83/04, C09D 7/00, C09D 11/02

(54) **DEFOAMER COMPOSITION BASED ON OIL-IN-WATER EMULSIONS**

(30) Priority: 08.10.2022 WO PCT/CN2022/123790
(71) Applicant: Evonik Operations GmbH, 45128 Essen (DE)
(72) Inventor: Sun, Yi, Shanghai, 201108 (CN); Hu, Yanling, Shanghai, 201108 (CN); Niedballa, Jonas, 45130 Essen (DE); Münster, Daniela, 45329 Essen (DE); Chen, Xuefang, Guangzhou, 510623 (CN); Li, Gang, Shanghai, 201108 (CN); Fan, HaiYi, Shanghai, 201401 (CN); Struck, Susanne, 47198 Duisburg-Homberg (DE)
(74) Representative: Evonik Patent Association

(57) **Abstract**

The present invention relates to a defoamer composition comprising
I) an oil phase,
II) a water phase,
III) at least one O/W emulsifier, and
IV) at least one W/O emulsifier as co-emulsifier
wherein the amount of the water phase is 20 - 90 wt.%, preferably 60 - 85 wt.% based on the total weight of the composition, characterized in that the oil phase is an oil-in-oil emulsion comprising
A) at least one or more vegetable oil as component A,
B) at least one or more polyether ester as component B and
C) at least one or more polyether-modified polysiloxane, and optional
D) at least one or more hydrophobic particle as component D.

## Description

### Technical field

The present invention relates to a defoamer composition based on vegetable oil.

### Background art

In the coating and ink industry, foaming issues are ubiquitous in the water-borne coating and ink systems, since the water-borne systems normally have surfactants, dispersants, wetting agents, emulsifiers and the like in their formulations, which lower the surface tension, readily leading to foam formation. More recently, classes of defoamers have been introduced to the market that can prevent or eliminate the foam which occurs during the coating and ink production, ink printing and coating application process.

For example, mineral oil or silicone oil-based emulsion type defoamer was largely used in the printing ink industry. However, mineral oil has potential negative effects on human health. Thus, it is harmful when the mineral oil is used in the waterborne ink formulation for food contact. Silicone oil-based defoamer could tend to create defects in the printing ink layer when they are added in the printing process without enough shear force to disperse this kind of defoamer into ink systems.

Known polyether-modified siloxane based defoamers with good defoaming ability give a better performance regarding compatibility in the waterborne coating and ink systems than silicone oil, but still the compatibility is not good enough when the application only is under low shear force to disperse into ink systems.

While health-friendly vegetable oil based defoamer is easy to disperse but do not have enough power to knockdown foam created during printing.

It would therefore be desirable to provide a defoamer composition which is in particular advantageous for food contact waterborne coating and ink systems by the combination of polyether-modified polysiloxane and vegetable oil. However, polyether-modified polysiloxane and vegetable oil cannot dissolve with each other, especially when the polyether-modified polysiloxane is used in relative high amount to enhance the defoaming ability of the vegetable oil.

### Summary of the invention

It is an object of the present invention to overcome at least part of the defects of the prior art, and to provide defoamer composition with good defoaming ability, good compatibility and easy dispersion under low shear force, e.g. when added into ink formulation during the printing process.

This objective is accomplished by the discovery of a new defoamer composition comprising
I) an oil phase,
II) a water phase,
III) at least one O/W emulsifier, and
IV) at least one W/O emulsifier as co-emulsifier
wherein the amount of the water phase is 20 - 90 wt.%, preferably 60 - 85 wt.% based on the total weight of the composition, characterized in that the oil phase is an oil-in-oil emulsion comprising
A) at least one or more vegetable oil as component A,
B) at least one or more polyether ester as component Band
C) at least one or more polyether-modified polysiloxane, and optional
D) at least one or more hydrophobic particle as component D.

### Detailed description of the invention

The terms "siloxanes" and "polysiloxanes" are used as synonyms in the present invention.

The terms "defoamer compostion" and "oil-in-water emulsion" are used as synonyms in the present invention.

In the context of the present invention the terms "oil phase" and "oil-in-oil emulsion are to be understood as being synonymous.

The term "defoamer" in the present case encompasses both products and formulations that prevent foam and also those that destroy foam and enable deaeration. In practice, the transitions between these product properties are blurred, so that here the common collective term defoamer is used.

It has surprisingly been found that the inventive oil-in-oil emulsion is stable which could be used as the oil phase for the inventive defoamer composition.

Without being bound to a theory, the inventors believe that the polyether ester has the function as a compatibilizer or as a stabilizer in the oil-in-oil emulsion comprising the polyether-modified polysiloxane as the dispersed phase and the vegetable oil as the continuous phase.

### Vegetable oil as component A

The vegetable oils may be selected from those conventionally used in the art. The vegetable oil useful in the present invention is typically liquid in room temperature. The most kinds of vegetable oil are triglycerides of saturated and/or unsaturated fatty acid.

Preferably, component A is selected from the group consisting of soybean oil, rape seed oil, canola oil, sunflower oil, corn oil, peanut oil and palm oil or a mixture thereof.

### Polyether ester as component B

Preferably, component B is selected from the group consisting of polyoxyalkylene ester and polyoxyalkylene (poly)glyceryl ether ester.

It is particularly preferable that the polyoxyalkylene ester is derived from PEG, PPG, polyethylene-propylene glycol and fatty acids.

Preferably, the carbon chain length of fatty acid is from C2 to C22, more preferably the carbon chain length is from C10 to C18.

It is preferable when the PO unit of polypropylene glycol can be from 10 to 100 mole, more preferably from 14 to 55 mole.

The EO unit of polyethylene glycol can be preferably from 5 to 50 mole, more preferably from 8 to 10.

The total mole of EO-PO unit of polyethylene-propylene glycol can be preferably 5 to 100 mole, more preferably from 10 to 80 mole.

The polyoxyalkylene ester corresponds to the average general formula (III):

R₇-(EO)ₐ(PO)_{b}-R₈ (III)

wherein
R₇ and R₈, which may be identical or different, represent group chosen from: - R₆C(O)O-, wherein R₆ is a monovalent aliphatic saturated or unsaturated hydrocarbon radical having 2 to 22 carbon atoms, preferably from 10 to 18 carbon atoms; - hydroxyl, and with the proviso that R₇ and R₈ do not represent hydroxyl at the same time,
value a is from 0 to 50, value b is from 0 to 100, and with the proviso that a+b can be 5 to 100.

If R₇ and R₈, which may be identical or different, represent R₆C(O)O-, wherein R₆ is a monovalent aliphatic saturated or unsaturated hydrocarbon radical having 2 to 22 and preferably from 10 to 18 carbon atoms, such a polyoxyalkylene ester is a di-ester.

If either one of R₇ and R₈ represents a hydroxyl group, the polyoxyalkylene ester is a monoester.

The polyoxyalkylene ester can be a mixture of different monoesters or a mixture of different diesters or a mixture of monoester and di-ester to disperse the polyether siloxane in the vegetable oil.

Examples of polyoxyalkylene esters are PEG 400 oleic oil diester or PPG 2000 tall oil diester.

Besides the polyoxyalkylene esters, one could also additionally or alternatively use polyoxyalkylene (poly)glyceryl ether esters to obtain the desired properties.

For the polyoxyalkylene (poly)glyceryl ether and its ester, the structure of formula (IV) is for example as follows: 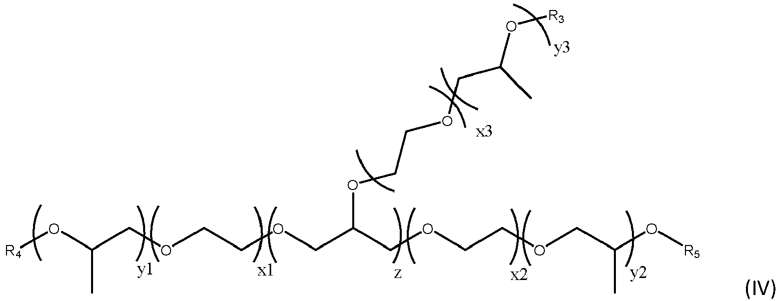 in which the value z of the unit of glyceryl group can be from 1 to 10. And x1+x2+x3 of total EO unit can be from 0 to 50, y1 +y2+y3 for total PO unit can be 0 to 100, and total EO and PO unit can be from 5 to 100.
R₃, R₄ and R₅, which may be identical or different, represent R₆C(O)O-, wherein R₆ is a monovalent aliphatic saturated or unsaturated hydrocarbon radical having 2 to 22 and preferably from 10 to 18 carbon atoms.

Or either one or two of R₃, R₄ and R₅ represent a hydroxyl group, the rest of them, identical or different, represent R₆C(O)O-, wherein R₆ is a monovalent aliphatic saturated or unsaturated hydrocarbon radical having 2 to 22 and preferably from 10 to 18 carbon atoms.

The polyoxyalkylene (poly)glyceryl ether esters as defined above can be used singly or as mixture of two or more kinds.

Particularly, polyoxyalkylene (poly)glyceryl ether, in which all of R₃, R₄ and R₅ represent a hydroxyl group, may be used together with the polyoxyalkylene ester as define above to disperse the polyether siloxane in the vegetable oil.

Particularly, polyoxyalkylene (poly)glyceryl ether, in which R₃, R₄ and R₅ represent a hydroxyl group, may be used together with the polyoxyalkylene (poly)glyceryl ether ester to disperse the polyether siloxane in the vegetable oil.

Suitable polyoxyalkylene (poly)glyceryl ether includes PPG 4000 glyceryl ether. Suitable polyoxyalkylene (poly)glyceryl ether ester includes PPG 4000 glyceryl oleic oil triester.

### Polyether-modified polysiloxane as component C

Preferably, component C conforms to general formula (I)

R₁O-A-[B-A-]_{f} R₁ (I)

wherein
A is a polyoxyalkylene block with the average formula (CₚH₂ₚO-)_{q}, in which p has a value of 2.8 to 4 and q has a value 15 to 100, preferably p has a value of 2.8 to 3.5;
B is a polysiloxane block with the average formula [SiO(R₂)₂-]_{g} wherein the R₂ groups are the same or different, each independently representing an alkyl group of 1 to 4 carbon atoms or a phenyl group; and g has a value of 10 to 100 and preferably 15 to 70;
and R₁ groups are the same of different and each independently represents a hydrogen atom or an alkyl group of 1 to 4 carbon atoms and
f has a value of 1 to 20 and preferably 4 to 15,
and/or
wherein component C conforms to general formula (II) 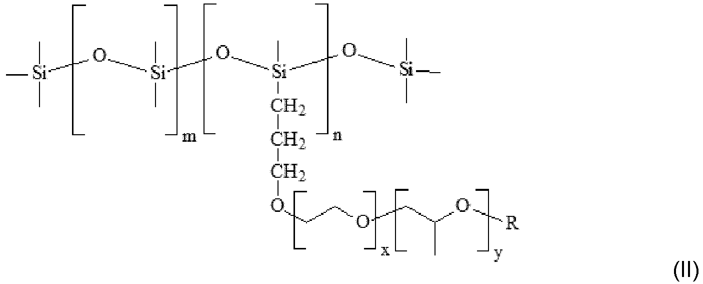 wherein
the R group represents a hydrogen atom or an alkyl group of 1 - 4 carbon atoms;
m has a value of 20 - 80 and n has a value of 5 - 10;
and x has a value of 0 - 10 and y has a value from 5 - 40.

Component C according to formula (I) are known in principle. Further production processes are disclosed in EP 0 331 952 B1.

Component C according to formula (II) are known in principle. Further production processes are disclosed in WO 2009/138205.

It is likewise conceivable that further solids, for example silica, waxes and solids may be added to further increase the defoaming activity. Such additives are known to those skilled in the art.

It is preferably when the hydrophobic particles are selected from hydrophobic fumed silica and hydrophobic wax.

Preferably, the hydrophobic particles can be hydrophobically modified silica particles and/or wax like ethylene bis-stearamide (EBS wax) or polyethylene wax (PE wax).

Preferably, the composition having an oil-in-oil emulsion consisting of
a) 20 - 80 wt.%, preferably 40 - 60 wt.% of component A),
b) 10 - 40 wt.%, preferably 15 - 25 wt.% of component B),
c) 10 - 70 wt.%, preferably 10 - 50 wt.%, more preferably 20 - 40 wt.%, of component C), and
d) optional 1 - 10 wt.%, preferably 2 - 5 wt.%, of component D),
based on the total weight of the oil-in-oil emulsion.

It is preferable, from the viewpoint of the cost effectiveness and the defoaming performance, that the oil-in-oil emulsion contains 20 and 50 wt.% of the polyether-modified polysiloxane based on the total weight of the oil-in-oil emulsion.

The oil-in-oil emulsion preferably does not comprise mineral oil.

Preferably, the inventive defoamer composition comprises a thickener and/or a pH modifier.

The emulsifiers can be selected based on the calculations of HLB according to the Davis methods. It is preferably when the O/W emulsifier has a HLB from 8 - 20, more preferably from 10-18.

It is preferably when the W/O emulsifier as co-emulsifier has a HLB from 2 - 8, more preferably from 2 - 5.

The total amount of emulsifiers is preferably 2 - 10 wt.%, more preferably 3 - 8 wt.%, based on the total weight of the defoamer composition.

The thickener is preferably an alkali swellable emulsion thickener, which is used to stabilize the oil phase in the water. The amount of alkali swellable emulsion thickener is preferably from 1 - 5 wt.%, more preferably 2 - 4 wt.% based on the total weight of the defoamer composition.

The pH modifier may be NaOH solution, which is used to adjust the pH value to 7 - 9 to swell the alkali swellable emulsion thickener to adjust viscosity to stabilize the emulsion.

It is preferably when the O/W emulsifier and the W/O emulsifier as co-emulsifier may be dissolved in the water phase.

The inventive defoamer composition not only has good compatibility to waterborne formulations such as painting and ink formulations, but also has good defoaming ability.

According to another aspect of the present invention, it provides an oil-in-oil emulsion comprising
A) at least one or more vegetable oil as component A,
B) at least one or more polyether ester as component Band
C) at least one or more polyether-modified polysiloxane, and optional
D) at least one or more hydrophobic particle as component D.

Preferably, the oil-in-oil emulsion consisting of
a) 20 - 80 wt.%, preferably 40 - 60 wt.% of component A),
b) 10 - 40 wt.%, preferably 15 - 25 wt.% of component B),
c) 10 - 70 wt.%, preferably 10 - 50 wt.%, more preferably 20 - 40 wt.%, of component C), and
d) optional 1 - 10 wt.%, preferably 2 - 5 wt.%, of component D),
based on the total weight of the oil-in-oil emulsion.

The invention further provides for the use of the oil-in-oil emulsion for producing a defoamer composition.

A further aspect of the invention is the use of the defoamer composition for producing dispersions, millbases, paints, coatings or printing inks, inkjet, grind resins, pigment concentrates, colour preparations, pigment preparations, filler preparations or coating compositions.

The examples which follow are provided merely to elucidate this invention to those skilled in the art and do not constitute any limitation of the described subject matter or of the described process whatsoever.

### Examples

The invention is now described in detail by the following examples. The scope of the invention should not be limited to the embodiments of the examples.

### 1. Production of the inventive defoamer composition and comparative composition Example 1

5g EBS wax was melt at 160°C and dispersed into 45g rape seed oil under 3000rpm by a highspeed disperser. Then 10g PEG 400 oleic oil diester and 10g PPG 2000 tall oil diester were added into the mixture under 500rpm. Then 30g mixture of a polyether-modified polysiloxane produced according to example of EP 0 331 952 B1 and a polyether-modified polysiloxane produced according to comparative Example 6 of WO 2009/138305 was added into the mixture and the mixture was blended at 500 rpm for 30mins to form an oil phase. Then the oil phase was left at least overnight to obtain an oil-in-oil emulsion.

71g water was placed into reactor and then 2.5g Tego Tagat R 200 (HLB=18, as W/O emulsifier, from Evonik) and 1.5g Tego Arknol S2 (HLB=5, as co-emulsifier, from Evonik) were added into the water at 300rpm and 80°C under vacuum. Then 4g Rheovis^{®} AS 1125 (alkali swellable emulsion thickener, from BASF) was added under 300rpm for 10mins. 20g oil phase mixture prepared above was added and the obtained mixture was mixed for 30mins. Then 0.25g NaOH water solution (50%) and 0.75g biocide was added and mixed for additional 10mins. Then the obtained mixture was homogenized to obtain an inventive defoamer composition.

### Example 2

The same preparation procedure as the one in Example 1 was used to prepare the oil-in-water emulsion of Example 2, except that in Example 2, EBS wax was substituted with PE wax and rape seed oil was substituted with soybean oil.

### Example 3

Example 3 was prepared with the same method as the one in Example 1 except that 10g PEG 400 oleic oil diester and 10g PPG 2000 tall oil diester was replaced with 20g PPG 2000 tall oil diester.

### Example 4

The oil-in-water emulsion for this example was prepared with the same method as the one in Example 1 except that 3g EBS wax, 27g rape seed oil, 20g PPG 2000 tall oil diester and 50g polyether siloxane mixture were used to replace 5g EBS wax, 45g rape seed oil, 10g PEG 400 oleic oil diester and 10g PPG 2000 tall oil diester, and 30g polyether siloxane mixture.

### Example 5

Example 5 was prepared with the same method as the one in Example 1 except that 59g water was placed into reactor and then 3.75g Tego Tagat R 200 (HLB=18, as W/O emulsifier) and 2.25g Tego Arknol S2 (HLB=5, as co-emulsifier), and 30g oil phase mixture were added.

### Example 6

The oil-in-water emulsion for Example 6 was prepared with the same method as the one in Example 1 except that 3g PE wax, 27g soybean oil and 50g polyether siloxane mixture were used to replace 5g EBS wax, 45g rape seed oil and 30g polyether siloxane mixture.

### Example 7

Example 7 was again prepared with the same method as the one in Example 1 except that 10g PEG 400 oleic oil diester and 10g PPG 4000 glyceryl ether were used instead of 10g PEG 400 oleic oil diester and 10g PPG 2000 tall oil diester.

### Example 8

Example 8 was prepared with the same method as the one in Example 1 except that 10g PEG 400 oleic oil diester and 10g PPG 4000 glyceryl oleic oil triester were used instead of 10g PEG 400 oleic oil diester and 10g PPG 2000 tall oil diester.

### Comparative Examples 1-4

Comparative Examples 1 - 4 were prepared with the same method as the one in Example 1 but without the hydrophobic particles and the polyether ester.

### 2. Production of ink formulations for Performance test

To compare the inventive defoamer with other prior art defoamer technology like silicone oil defoamer, polyether siloxane defoamer, mineral oil defoamer and vegetable oil defoamer, the following two ink formulations were tested.

**Table 1: Formulation 1**

| **Raw materials** | **Amount (wt. %)** | **Supplier** |
|---|---|---|
| Joncryl 90 | 40 | BASF |
| Joncryl 678 solution | 50 | - |
| Dowanol PM | 4.5 | DOW |
| AMP-95 | 0.5 | DOW |
| Surfynol 440 | 0.3 | Evonik |
| deionized water | 4.7 | |

**Table 2: Formulation 2**

| **Raw materials** | **Amount (wt. %)** | **Supplier** |
|---|---|---|
| Neocryl A-1091 | 40 | DSM |
| Joncryl 678 solution | 50 | BASF |
| Dowanol PM | 4.5 | DOW |
| AMP-95 | 0.5 | DOW |
| Rewopol DO 75 | 0.3 | Evonik |
| deionized water | 4.7 | |

**Table 3: The Joncryl 678 solution was prepared based on the following formulation.**

| **Raw materials** | **Amount (wt.%)** | **Supplier** |
|---|---|---|
| Joncryl 678 | 28.3 | BASF |
| ammonia water (28% in water) | 11 | |
| Tego Foamex 830 | 0.1 | Evonik |
| deionized water | 60.6 | |

### 3. Stability Testing of oil phase

The stability of the oil phase with or without polyether ester was compared to check the stability of polyether siloxane in the vegetable oil. The prepared oil phase samples were stored at room temperature to see whether the phase separation will happen. The results of the stability test are reported in Table 4. All weight percentages are relative to the total weight of the respective oil phase.

**Table 4**

| Component (wt. %) | Ex. 1 | Ex. 2 | Ex. 4 | Ex. 6 | Ex. 7 | Ex. 8 | Comp. Ex. 1 | Comp. Ex. 2 | Comp. Ex. 3 | Comp. Ex. 4 |
|---|---|---|---|---|---|---|---|---|---|---|
| Rape seed oil | 45 | | 27 | | 45 | 45 | 50 | 70 | | |
| Soybean oil | | 45 | | 27 | | | | | 50 | 70 |
| EBS wax | 5 | | 3 | | 5 | 5 | | | | |
| PE wax | | 5 | | 3 | | | | | | |
| polyether diester | 20 | 20 | 20 | 20 | 10 | 10 | | | | |
| polyoxyalkylene glyceryl ether | | | | | 10 | | | | | |
| polyoxyalkylene glyceryl ether ester | | | | | | 10 | | | | |
| polyether siloxane mixture | 30 | 30 | 50 | 50 | 30 | 30 | 50 | 30 | 50 | 30 |
| Phase separation | No separ ation over 1 year | No separa tion over 1 year | No separa tion over 1 year | No separa tion over 1 year | No separa tion over 14 days | No separa tion over 14 days | Separated overnight | Separated overnight | Separated overnight | Separated overnight |

It was found that the inventive oil-in-oil emulsions (Ex 1 - 8) did not showing any phase separation. It was found that the Comparative examples without component B showed a phase separation.

### 4. Compatibility test

Defoamer composition was mainly added during the printing process. So only low shear force is available to disperse the defoamer into ink systems. To simulate the process, the defoamer is added into ink formulation and mixed by hand then draw down on the Laneta chart at 7-micron wet film thickness and then check the compatibility after the film is dried.

The compatibility is ranked by scoring:
point 5 → the best compatibility without defects caused by defoamer droplet,
point 4 → slight defects,
point 3 → little defects in the ink layer,
point 2 → some defects,
point 1 → many defects,
point 0 → the worst combability with lots of defects caused by defoamer.

D-foam RC-920, a silicone oil defoamer supplied by Clariant, with 100% active content was post added at 0.1% based on the ink formulation. The emulsion type defoamer according to the present invention (Example 1 and Example 4) and Tego^{®} Foamex 1488 as well as Tego^{®} Foamex 825 (The latter two defoamers are both polyether siloxane emulsion defoamers supplied by Evonik) were all 20% oil in the emulsions and post added at 0.3% based on the ink formulations. Each of the two vegetable oil-based defoamers, Tego^{®} Foamex 833 supplied by Evonik and Tego^{®} Foamex 18 supplied by Evonik, is 100% active content and was added at 0.3% in the ink formulations. Each of the two mineral oil type defoamers, Foamstar ST2410 AC supplied by BASF and Tego^{®} Foamex 9 supplied by Evonik, with 100% active content was added at 0.3% in the ink formulation respectively for compatibility reference. The above percentages are all percentages by weight.

The test results in both ink formulations are reported in Table 5 and Table 6.

**Table 5: Compatibility test with Formulation 1**

| Sample | Compatibility ranking | remarks |
|---|---|---|
| Example 1 | 5 | 20% oil in the emulsion |
| Example 4 | 4 | 20% oil in the emulsion |
| Foamstar ST2410 AC | 4 | 100% active |
| Tego^{®} Foamex 9 | 4 | 100% active |
| Tego^{®} Foamex 833 | 5 | 100% active |
| Tego^{®} Foamex 18 | 5 | 100% active |
| D-foam RC-920 | 1 | 100% active |
| Tego^{®} Foamex 1488 | 3 | 20% oil in the emulsion |
| Tego^{®} Foamex 825 | 3 | 20% oil in the emulsion |

**Table 6: Compatibility test with Formulation 2**

| Sample | Compatibility ranking | remarks |
|---|---|---|
| Example 1 | 5 | 20% oil in the emulsion |
| Example 4 | 4.5 | 20% oil in the emulsion |
| Foamstar ST2410 AC | 3.5 | 100% active |
| Tego^{®} Foamex 9 | 4 | 100% active |
| Tego^{®} Foamex 833 | 5 | 100% active |
| Tego^{®} Foamex 18 | 5 | 100% active |
| D-foam RC-920 | 1 | 100% active |
| Tego^{®} Foamex 1488 | 3 | 20% oil in the emulsion |
| Tego^{®} Foamex 825 | 2.5 | 20% oil in the emulsion |

Comparing to silicone oil and polyether siloxane emulsion defoamer, the inventive defoamer composition Example 1 and 4 showed a significant improvement on the compatibility in the ink formulation that does not cause too many defects even under low shear force. Such compatibility is even comparable to that of vegetable oil defoamers.

### 5. Defoaming test

Defoaming ability is compared by using a bubbling test method wherein a stainless-steel bubble stone is used to put into 200g ink with different kinds of defoamers respectively by pumping air to create foam at 2.0L/min air flow. The different kinds of the defoamers are post added into the ink formulations respectively and mixed simply by hand. After that, the foam height is recorded along with time up to 30mins. The lower the foam height, the better the defoaming ability.

0.3 wt.% of the inventive defoamer composition (Examples 1 and 4) was added into both ink systems respectively. The amount of mineral oil (Foamstar ST2410 AC), vegetable oil based defoamers (Tego^{®} Foamex 833 and Tego^{®} Foamex 18) and polyether siloxane emulsion defoamers (Tego^{®} Foamex 1488) were added into both ink systems was also 0.3 wt.%. The amount of silicone oil defoamer (D-foam RC-920) with 100 wt.% active content were added into both ink systems was 0.1 wt.%.

The test results in both ink formulations are reported in Table 7 and Table 8.

**Table 7: Defoaming test with Formulation 1**

| Sample | 2min | 5min | 10min | 20min | 30min |
|---|---|---|---|---|---|
| Foamstar ST2410 AC | 180 | 205 | 230 | 260 | 280 |
| Tego^{®} Foamex 1488 | 225 | 215 | 220 | 235 | 270 |
| Tego^{®} Foamex 833 | 380 | 385 | 390 | 395 | 400 |
| Tego^{®} Foamex 18 | 315 | 315 | 320 | 320 | 320 |
| D-foam RC-920 | 420 | 440 | 450 | 470 | 485 |
| Example 1 | 170 | 175 | 195 | 200 | 210 |
| Example 4 | 170 | 190 | 205 | 215 | 235 |

**Table 8: Defoaming test with Formulation 2**

| Sample | 2min | 5min | 10min | 20min | 30min |
|---|---|---|---|---|---|
| Foamstar ST2410 AC | 170 | 220 | 270 | 300 | 300 |
| Tego^{®} Foamex 1488 | 205 | 200 | 205 | 220 | 245 |
| Tego^{®} Foamex 833 | 455 | 450 | 460 | 470 | 475 |
| Tego^{®} Foamex 18 | 365 | 350 | 345 | 335 | 325 |
| D-foam RC-920 | 360 | 365 | 370 | 365 | 375 |
| Example 1 | 160 | 180 | 195 | 205 | 225 |
| Example 4 | 195 | 210 | 215 | 230 | 245 |

As the results show, both ink formulations according to the present invention showed a significant improvement in the defoaming ability compared to that of vegetable oil defoamers. The performance is even comparable to that of polyether siloxane emulsion defoamers. Comparing to mineral oil defoamer, even with a lower active content which is 27 wt.%, the defoaming ability is better than mineral oil with 100 wt.% active which is typical used in the ink formulation (when mineral oil was allowed to be added according to applicable governmental regulations).

The above description is presented to enable a person skilled in the art to make and use the invention and is provided in the context of a particular application and its requirements. Various modifications to the preferred embodiments will be readily apparent to those skilled in the art, and the generic principles defined herein may be applied to other embodiments and applications without departing from the spirit and scope of the invention. Thus, this invention is not intended to be limited to the embodiments shown but is to be accorded the widest scope consistent with the principles and features disclosed herein. In this regard, certain embodiments within the invention may not show every benefit of the invention, considered broadly.

## Claims

1. A defoamer composition comprising
I) an oil phase,
II) a water phase,
III) at least one O/W emulsifier, and
IV) at least one W/O emulsifier as co-emulsifier
wherein the amount of the water phase is 20 - 90 wt.%, preferably 60 - 85 wt.% based on the total weight of the composition, **characterized in that** the oil phase is an oil-in-oil emulsion comprising
A) at least one or more vegetable oil as component A,
B) at least one or more polyether ester as component B and
C) at least one or more polyether-modified polysiloxane, and optional
D) at least one or more hydrophobic particle as component D.

2. A composition according to claim 1 wherein component A is selected from the group consisting of soybean oil, rape seed oil, canola oil, sunflower oil, corn oil, peanut oil and palm oil or a mixture thereof.

3. A composition according to claim 1 or 2 wherein component B is selected from the group consisting of polyoxyalkylene ester and polyoxyalkylene (poly)glyceryl ether ester.

4. A composition according to claim 3 wherein the polyoxyalkylene ester is derived from PEG, PPG, polyethylene-propylene glycol and fatty acids.

5. A composition according to claim 4 wherein the carbon chain length of the fatty acids is from C2 to C22, preferably from C10 to C18.

6. A composition according to claim 4 or 5 wherein the EO unit of PEG is from 5 to 50 mole, preferably from 8 to 10 mole.

7. A composition according to claim 4 or 5 wherein the PO unit of PPG is from 10 to 100 mole, preferably from 14 to 55 mole.

8. A composition according to claim 4 or 5 wherein the total mole of EO-PO unit of polyethylene-propylene glycol is from 5 - 100 mole, preferably from 10 to 80 mole.

9. A composition according to any of the preceding claims wherein component C conforms to general formula (I)
R₁O-A-[B-A-]_{f} R₁ (I)
wherein
A is a polyoxyalkylene block with the average formula (CₚH₂ₚO-)_{q}, in which p has a value of 2.8 to 4 and q has a value 15 to 100, preferably p has a value of 2.8 to 3.5;
B is a polysiloxane block with the average formula [SiO(R₂)₂-]_{g} wherein the R₂ groups are the same or different, each independently representing an alkyl group of 1 to 4 carbon atoms or a phenyl group; and g has a value of 10 to 100 and preferably 15 to 70;
and R₁ groups are the same of different and each independently represents a hydrogen atom or an alkyl group of 1 to 4 carbon atoms and
f has a value of 1 to 20 and preferably 4 to 15,
and/or
wherein component C conforms to general formula (II) 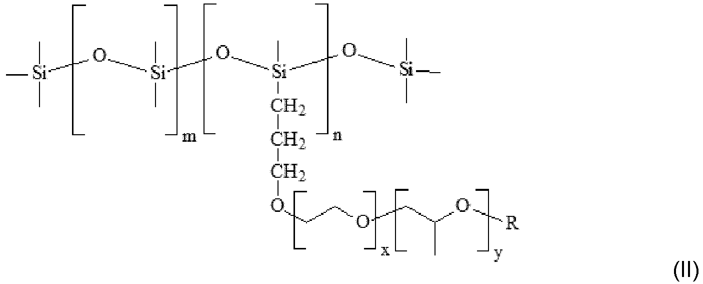 wherein
the R group represents a hydrogen atom or an alkyl group of 1 - 4 carbon atoms; m has a value of 20 - 80 and n has a value of 5 - 10;
and x has a value of 0 - 10 and y has a value from 5 - 40.

10. A composition according to claim 1, wherein the hydrophobic particles are selected from hydrophobic fumed silica and hydrophobic wax.

11. A composition according to any of the preceding claims wherein the oil-in-oil emulsion consisting of
a) 20 - 80 wt.%, preferably 40 - 60 wt.% of component A),
b) 10 - 40 wt.%, preferably 15 - 25 wt.% of component B),
c) 10 -70 wt.%, preferably 10 - 50 wt.%, more preferably 20 - 40 wt.%, of component C), and
d) optional 1 - 10 wt.%, preferably 2 - 5 wt.%, of component D),
based on the total weight of the oil-in-oil emulsion.

12. A composition according to any of the preceding claims comprising a thickener and/or a pH modifier.

13. An oil in oil emulsion according to any one of claims 2-11.

14. A painting or ink composition comprising the defoamer composition according to any one of claims 1 - 12.
